# EUROPÄISCHE PATENTSCHRIFT

(11) **EP 1 293 113 B1**
(45) Veröffentlichungstag und Bekanntmachung des Hinweises auf die Patenterteilung: **10.05.2006**
(21) Anmeldenummer: 02018999.9
(22) Anmeldetag: 27.08.2002
(51) Int. Cl.: A01B 61/02

(54) **Regelung für den Antrieb einer Zapfwelle an einem Landfahrzeug**
Control system for the propulsion of an agricultural vehicle power take off
Système de commande d'entraînement d'une prise de force d'un véhicule agricole

(30) Priorität: 15.09.2001 DE 10145643
(43) Veröffentlichungstag der Anmeldung: 19.03.2003
(73) Patentinhaber: CNH Österreich GmbH, 4300 St. Valentin (AT)
(72) Erfinder: Hrazdera, Oliver, Dipl-Ing., 4501 Neuhofen an der Krems (AT)
(74) Vertreter: Feldkamp, Rainer

(56) Entgegenhaltungen:
- EP-A- 0 842 804
- EP-A- 0 967 107
- DE-A- 1 630 199
- US-A- 3 342 079
- US-A- 5 899 950
- US-A- 6 092 013

## Beschreibung

Die Erfindung betrifft eine Regelung für den Antrieb einer Zapfwelle an einem Landfahrzeug, insbesondere an einem Traktor, mit den Merkmalen nach dem Oberbegriff des Patentanspruchs 1.

Der Antrieb der Zapfwelle an einem Traktor, der prinzipiell mit derartigen Antrieben an allen übrigen Landfahrzeugen übereinstimmt, ist gegenwärtig so aufgebaut, daß an dessen Motor ein Schaltgetriebe zur Erzeugung der in der Praxis üblichen Drehzahlen von 540, 750, 1000 oder 1400 Umdrehungen pro Minute angeschlossen ist. Dessen Abtriebswelle ist mit der Eingangswelle einer hydraulisch betätigten Kupplung, die von einem aus dem Hydraulikkreis des Traktors gespeisten Magnetventil mit Druck beaufschlagt wird, antriebsmäßig verbunden. Dieser Antriebsstrang setzt sich über die Ausgangswelle der hydraulisch betätigten Kupplung, auf der eine Bremse beliebiger Bauart angeordnet ist, bis zur Zapfwelle des Traktors fort. Auf die Zapfwelle ist einenends eine Gelenkwelle aufgesteckt, die mit ihrem anderen Ende mit dem Zapfwellenstummel eines front- oder heckseitig an das Hubwerk des Traktors angehängten Arbeitsgerätes in antriebsmäßiger Verbindung steht. Die Regelung der bisher bekannten Antriebe für eine Zapfwelle ist ausschließlich auf die optimale Gestaltung des An- und Auslaufes der Zapfwelle durch das Ein- bzw. Auskuppeln der hydraulisch betätigten Kupplung ausgerichtet, was durch die Veränderung der Menge und damit den Druckaufbau bzw. -abbau der zur hydraulisch betätigten Kupplung geleiteten Hydraulikflüssigkeit erreicht wird. Nach dem Anlauf ist keine Regelung mehr vorgesehen, so daß dann die Drehzahl der Zapfwelle im Betrieb in einem direkt proportionalen Verhältnis zur Motordrehzahl des Traktors steht.

Für solche Regelungen ist bereits eine Vielzahl von Ausführungsvarianten bekannt geworden, wovon eine in der WO 99/56978 A 1 näher erläutert ist. Dort ist am Traktor ein Steuergerät angebracht, das einen Prozessor enthält, der in Abhängigkeit von ihm zugeleiteter Eingangssignale ein spezielles Steuerprogramm abarbeitet und dementsprechende Ausgangssignale erzeugt. Im sogenannten Normalbetrieb kommen die Eingangssignale von je einem Taster zum Ein- bzw. Ausschalten der Zapfwelle sowie von einem Sensor zur Überwachung der Motordrehzahl und einem weiteren Sensor zur Überwachung der Drehzahl der Zapfwelle. Vom Bediener kann wahlweise noch auf einen sogenannten HTS-(Headland Turn Sequence) bzw. Managementbetrieb umgeschaltet werden, wo dem Steuergerät weitere Eingangssignale über einen Taster zum Einschalten des HTS- bzw. Managementbetriebs sowie über Sensoren zur Überwachung der Drehzahl der Hinterachse und des Hubwerkstatus (Regeln und Transport) vermittelt werden.

Genannte Ausgangssignale werden an ein als Schaltventil fungierendes Magnetventil weitergeleitet, das in dem Fall ein pulsweitenmoduliertes Ein-/ Ausventil ist. Dieses Magnetventil leitet daraufhin den anliegenden Druck der Hydraulikflüssigkeit aus dem Hydraulikkreis des Traktors so an die hydraulisch betätigte Kupplung weiter, daß diese nach dem speziellen Steuerprogramm des Steuergerätes während einer bestimmten Zeitdauer sanft ein- bzw. auskuppelt. Ein Teil der Eingangssignale sichert dabei den störungsfreien Ablauf dieser Funktionen und ein anderer Teil steuert im Managementbetrieb darüber hinaus das Ein- bzw. Auskuppeln der hydraulisch betätigten Kupplung in Abhängigkeit vom Hubwerkstatus des Traktors und von dessen Fahrgeschwindigkeit automatisch, wobei noch zusätzliche Sicherheitsschaltungen zum Schutz des Bedieners installiert sind.

Nachteilig an dieser Steuerung ist, daß sie für ein optimales Ein- bzw. Auskuppeln, worunter ein möglichst schnelles und sanftes Kuppeln zur Vermeidung von Verschleiß an der hydraulisch betätigten Kupplung, die Übertragung von für die Kupplung unschädlich hoher Drehmomente sowie die Vermeidung von Scherbolzenbrüchen am Arbeitsgerät verstanden wird, wesentliche Einsatzbedingungen nicht berücksichtigt. Dazu zählen einmal Veränderungen in der Viskosität der Hydraulikflüssigkeit durch variierende Außentemperaturen. Zum anderen wird durch das spezielle Steuerprogramm im Steuergerät auf den Kupplungsvorgang kein Einfluß genommen, wenn sich im Anlaufmoment stark voneinander unterscheidende Arbeitsgeräte zum Einsatz kommen. Ebenso bleiben die Ausgangsdrehzahlen des Motors im Augenblick des An- bzw. Auslaufes der Zapfwelle im Steuerprogramm unbeachtet, obwohl die bekanntlich infolge unterschiedlicher Leistungsabnahmen vom Motor stark schwanken können. Schließlich wird ein weiterer Nachteil in dieser Steuerung darin gesehen, daß keine Möglichkeit zur manuellen variablen Einstellung für die Sanftheit des Ein- und Auskuppelns vorgesehen ist. Deshalb handelt es sich bei dieser Ausführungsvariante nur um eine ganz normale Steuerung, die bei weitem nicht so variabel wie eine Regelung reagieren kann. Alle genannten Nachteile sind der Grund dafür, daß die so gesteuerte hydraulisch betätigte Kupplung, die übrigen Antriebselemente sowie die Arbeitsgeräte unter diesen Umständen nur eine eingeschränkte Lebensdauer aufweisen, weil der Anlauf zu abrupt vonstatten geht. Außerdem ist an dieser Steuerung noch zu bemängeln, daß im HTS- bzw. Managementbetrieb auf das Ein- und Auskuppeln der hydraulisch betätigten Kupplung in Abhängigkeit von einer gewünschten Aushubhöhe des Arbeitsgerätes kein Einfluß genommen wird, was aber bei der Unterschiedlichkeit der einsetzbaren Arbeitsgeräte durchaus wünschenswert wäre. Dadurch kann es einmal zu Schäden an der Gelenkwelle kommen, wenn diese vor dem Erreichen hoher Knickwinkel beim Ausheben des Hubwerks nicht rechtzeitig ausgeschaltet bzw. schon beim Vorhandensein eines hohen Knickwinkels zu zeitig wieder eingeschaltet wird. Wird zum anderen im umgekehrten Fall die Gelenkwelle beim Absenken des Hubwerks nicht wieder rechtzeitig eingeschaltet, treten noch Verlustzeiten auf, die die effektive Einsatzzeit des Traktors vermindern, und dabei besteht die Gefahr, daß In dem Fall der Motor abgewürgt wird, weil das Arbeitsgerät schon Bodenberührung hat, bevor sich die Zapfwelle dreht.

Aus der US 6092013 A ist daher ein Steuersystem zur Steuerung einer Zapfwelle eines Arbeitsfahrzeuges bekannt, das einen Positionssensor zur Erzeugung eines Hubwerk-Positionssignals und eine damit verbundene Stauerschaltung aufweist, um die Zapfwelle bei einstellbaren ersten und zweiten Positionen des Hubwerks ein- bzw. auszukuppeln.

Eine weitere Ausführungsvariante einer Regelung zum An- und Auslauf einer Zapfwelle an einem Traktor ist mit der EP 0 443 325 A1 bekannt geworden, deren hauptsächliche Zielstellung darin besteht, für die hydraulisch betätigte Kupplung und für die nachfolgenden Antriebselemente bis zum Arbeitsgerät kritische Betriebszustände, erhöhten Verschleiß und im Extremfall Zerstörungen an allen Antriebaetementen sowie den Arbeitsgeräten zu vermeiden. Der Aufbau dieser aber ebenfalls nur als Steuerung arbeitenden Regelung stimmt mit der aus der vorstehend beschriebenen Lösung völlig überein, da sie ebenfalls ein Eingangssignale empfangendes und daraus Ausgangssignale bildendes Steuergerät besitzt, wobei die Ausgangssignale an ein als Schaltventil fungierendes Magnetventil zum Ein- oder Auskuppeln der hydraulisch betätigten Kupplung im Antriebsstrang zur Gelenkwelle weitergeleitet werden. In einer bevorzugten Ausführungsform ist das Magnetventil ein Proportionalventil, das vom Steuergerät getaktet angesteuert und dadurch betätigt wird. Als Eingangssignal wird einmal die Motordrehzahl überwacht, wobei die hydraulisch betätigte Kupplung vom Steuergerät im Falle des Absinkens der Motordrehzahl unter einen vorgegebenen Grenzwert ausgekuppelt und bei dessen Überschreiten wieder eingekuppelt wird. Als weiteres Eingangssignal werden die Drehzahlen der Eingangswelle und der Ausgangswelle der hydraulisch betätigten Kupplung mittels Sensoren erfaßt, aus denen das Steuergerät bei sich einstellenden Unterschieden den vorhandenen Schlupf errechnet. Übersteigt auch der einen vorgegebenen Grenzwert, wird daraufhin die hydraulisch betätigte Kupplung ausgekuppelt und beim Unterschreiten wieder eingekuppelt. In gleicher Weise werden als Eingangssignale die Drehschwingungen an der Eingangswelle und der Ausgangswelle der hydraulisch betätigten Kupplung verarbeitet. Schließlich wird die Aushubhöhe des Hubwerks am Traktor verfolgt und beim Erreichen eines vorgegebenen Grenzwertes ausgekuppelt. Zum Zwecke des möglichst schnellen und sanften Einkuppelns ist im Steuergerät noch eine Kennlinie gespeichert, deren Funktion mit dem Steuerprogramm aus der Steuerung nach der WO 99/56978 A1 vergleichbar ist. Bezüglich der Nachteile dieser Steuerung wird zur Vermeidung von Wiederholungen auf die Nachteile der zuerst beschriebenen Steuerung verwiesen, weil diese identisch sind. Ein weiterer Nachteil kommt aber für diese Steuerung noch hinzu, da in ihr kein HTS-bzw. Managementbetrieb vorgesehen ist.

Darüber hinaus haben beide vorstehend beschriebene Ausführungsvarianten noch ganz wesentliche gemeinsame Nachteile. So gestaltet sich der An- und Auslauf der Zapfwelle meist nicht zufriedenstellend, da die hydraulisch betätigte Kupplung nur geringe Schleifzeiten zuläßt. Zur Verbesserung dieser Situation sind deshalb sehr komplizierte und damit kostenintensive Regelungen im Einsatz. Die Notwendigkeit des Vorhandenseins einer Kupplung, eines Schaltgetriebes mit langen Schalthebeln und einer Bremse führt zwangsläufig zu einer großen Bauweise, was sich nachteilig auf das Design in der Kabine auswirkt. Darüber hinaus ist die Kupplung ein Kosten verursachendes Verschleißteil. Aber auch nach erfolgtem Anlauf der Zapfwelle ergeben sich für deren Antrieb durch das Fehlen einer Regelung in diesem Bereich ganz wesentliche Nachteile. So ist durch die direkte antriebsmäßige Verbindung zwischen dem Motor des Traktors und der Zapfwelle unter Zwischenschaltung des Schaltgetriebes und der hydraulisch betätigten Kupplung keine stufenlose Wahl der Zapfwellendrehzahl unabhängig von der Motordrehzahl möglich.

Das führt dazu, dass der Motor ständig in einem hohen Drehzahlbereich gefahren werden muss, so dass der Kraftstoffverbrauch des Motors hoch ist und der Fahrer dadurch einer unnötigen Lärmbelästigung ausgesetzt ist. Weiterhin ist noch zu bemängeln, dass der in manchen Landfahrzeugen vorzufindende PTO-MODE, worunter das Konstanthalten der Motordrehzahl über alle Fahrgeschwindigkeiten verstanden wird, Einschränkungen erfährt, da bei konstanter Motordrehzahl die Fahrgetriebeübersetzung nur sehr langsam verstellt werden kann und das Fahrzeug dadurch träge wird. Im Falle des in der Praxis nicht selten vorkommenden Drehzahlabfalls des Motors ist auch noch die maximale Drehzahl der Zapfwelle begrenzt. Dieser Umstand führt bei Arbeitsgeräten, die eine sehr konstante Zapfwellendrehzahl benötigen dazu, dass diese automatisch vom Antrieb abgeschaltet werden. Ein sehr typisches Beispiel dafür wäre der Einsatz einer Sämaschine. Schließlich ist mit einem derartigen Antrieb die Arbeitsweise der Zapfwelle als richtige Wegzapfwelle nicht zu realisieren. Ein sehr wichtiger Nachteil dieses Antriebes ist noch, dass eine Drehrichtungsumkehr der Zapfwelle nicht möglich ist.

Aus der DE-A-1 630 199 ist ein hydrostatischer Antrieb für Fahrzeuge, insbesondere Traktoren, bekannt, weil der eine von einem Antriebsmotor angetriebene verstellbare Getriebepumpe ein Druckmittel an Getriebemotoren, wie z. B. Hydromotoren liefert, von denen einige für den Fahrantrieb, ein weiterer jedoch auch für einen Zapfwellenantrieb vorgesehen ist. Die einzelnen Hydromotoren sind über ein Steuergerät mit einem Prozessor in Abhängigkeit von einzelnen Betriebsbedingungen steuerbar, die von Schaltern, Reglern, Sensoren und dergleichen bestimmt werden. Die Kombination aus einer Getriebepumpe und einem Hydromotor mit entsprechender Steuerung durch ein Steuergerät führt zur Bildung eines CVT-Getriebes (continuous variable transmission) für die Zapfwelle, so dass es möglich ist, den An- und Auslauf der Zapfwelle praktisch zeitlich unbegrenzt durchzuführen. Damit ist ein sanfter An- und Auslauf auch beim Betreiben von Arbeitsgeräten mit sehr hoher Leistungsaufnahme gewährleistet.

Der Erfindung liegt die Aufgabe zugrunde, eine Regelung der im Oberbegriff des Anspruchs 1 genannten Art zu schaffen, die in vorteilhafter Weise eine verbesserte Regelung des Antriebs der Zapfwelle an dem Landfahrzeug ermöglicht.

Diese Aufgabe wird durch die im Patentanspruch 1 angegebenen Merkmale gelöst,

Vorteilhafte Ausgestattungen und Weiterbildungen der Erfindung ergeben sich aus den Unteransprüchen.

Durch die Verwendung jeweiliger variabel einstellbarer Regler für den Normalbetrieb und den HTS- bzw. Managementbetrieb ist es möglich, durch deren Verstellen die Zeit für den An- und Auslauf der Zapfwelle für verschiedenenartige Arbeitsgeräte manuell zu verändern.

Vorzugsweise ist durch die Verwendung eines weiteren Sensor für die augenblickliche Position des Hubwerkes sichergestellt, dass das CVT-Getriebe Im HTS- bzw. Managementbetrieb automatisch anläuft bzw. stehenbleibt, weil verschiedene Arbeitsgeräte aufgrund ihrer unterschiedlichen Gestalt und Funktion auch in unterschiedlich abgesenkten Positionen bereits ihre volle Drehzahl wieder erreicht haben müssen und sich in bestimmten angehobenen Positionen allein aus Sicherheitsgründen auf keinen Fall mehr drehen dürfen. Ein Erreichen der gewünschten Winkelwerte wird vom Hubwerkstellungssensor signalisiert.

Bei einer vorteilhaften Ausgestaltung der Erfindung sind in einem Festwertspeicher des Steuergerätes Anlauf- und Auslautkurven für die Zapfwelle für alle denkbaren Einsatzbedingungen, für unterschiedliche Arbeitsgeräte und für sich verändernde maschinenspezifische Werte gespeichert. Das Steuergerät wählt daraus in Abhängigkeit von den ihm zugeleiteten Eingangssignalen die optimale Anlauf- bzw. Auslaufkurve für jedes Arbeitsgerät aus und übermittelt dementsprechende Ausgangssignale über eine Steuerleitung an das CVT-Getriebe.

Gemäß einer weiteren Ausgestaltung der Erfindung ist das Steuergerät mit einem Mode-Schalter zur Auswahl zwischen dem Normalbetrieb und dem HTS- bzw. Managementbetrieb und mit einem Mode-Schalter für die Wegzapfwelle verbunden.

Für die Signalverarbeitung der Schalter, Regler, Sensoren, Aktuatoren kann vorzugsweise ein CAN-Bussystem oder ein Time-Trigger-Protokoll (TTP) eingesetzt werden.

Gemäß einer weiteren vorteilhaften Ausgestaltung der Erfindung kann an jedem Arbeitsgerät ein Jobrechner angebracht sein, in dem der Typ des Arbeitsgerätes gespeichert ist, und der mit seinem Arbeitsgeräte-Bus mit dem Steuergerät in Verbindung steht.

Die Erfindung wird nachfolgend anhand eines Ausführungsbeispiels an einem Traktor in den beigefügten Zeichnungen erläutert, in denen:
- Fig. 1:: eine schematische Seitenansicht auf einen Traktor mit allen zur Regelung für den Antrieb einer Zapfwelle gehörenden Bauteilen gezeigt ist,

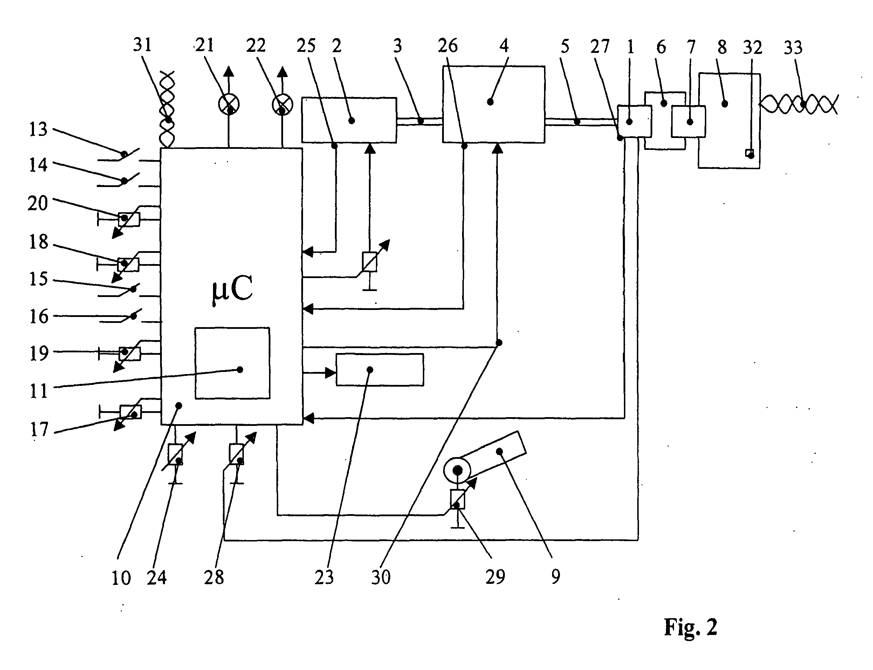

- Fig. 2:: ein elektrisch/hydraulisches Schaltbild der Regelung aus Figur 1 gezeigt ist.

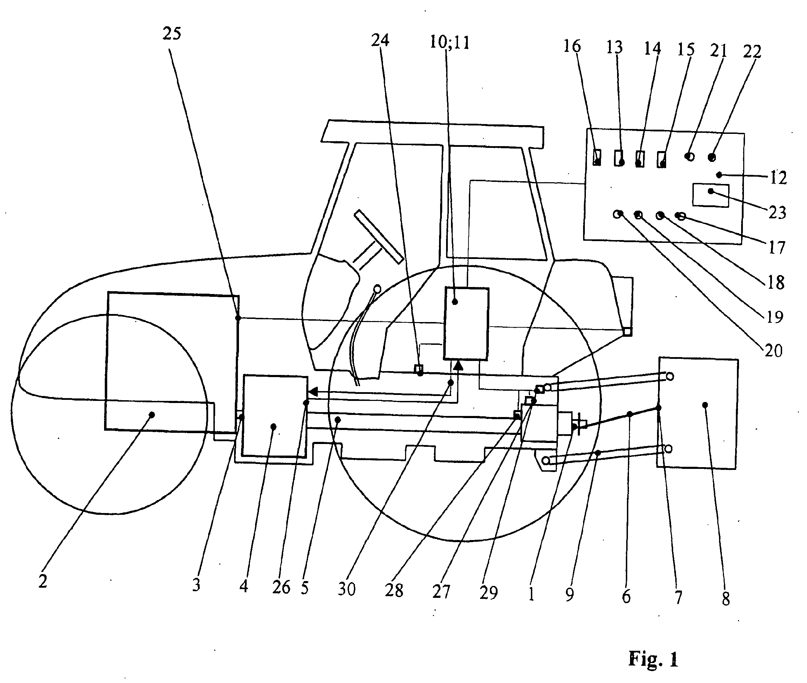

In Figur 1 ist in der Seitenansicht auf die in Fahrtrichtung des Traktors gesehene linke Seite der Antriebsstrang zum Antrieb der Zapfwelle 1 sichtbar gemacht, der von dessen Motor 2 ausgeht und an den über eine Welle 3 ein CVT-Getriebe 4 angeschlossen ist. Bei diesem CVT-Getriebe 4 handelt es sich um ein stufenlos arbeitendes Getriebe. Der Antriebsstrang setzt sich über eine Zwischenwelle 5 bis zur Zapfwelle 1 des Traktors fort. Auf die Zapfwelle 1 ist einenends eine Gelenkwelle 6 aufgesteckt, die mit ihrem anderen Ende mit dem Zapfwellenstummel 7 eines an den Traktor angebauten Arbeitsgerätes 8, das in diesem Ausführungsbeispiel heckseitig an das Hubwerk 9 des Traktors angehängt ist, in antriebsmäßiger Verbindung steht.

Zur Regelung für den Antrieb der Zapfwelle 1 gehört als wesentlichstes Bauteil ein Steuergerät 10, in dem ein Prozessor 11 zur Verarbeitung einer Vielzahl von Eingangssignalen und zur Weiterleitung von Ausgangssignalen an das CVT- Getriebe 4 installiert ist. Ein Teil der Eingangssignale kommt von der sich in der Fahrerkabine des Traktors befindenden Bedien- und Anzeigeeinheit 12, wozu ein Einschalter 13 und ein Ausschalter 14 zum Einschalten und Ausschalten des Antriebes des CVT- Getriebes 4 zählen. Dazu kommen noch ein Mode-Schalter 15 für den HTS- bzw. Managementbetrieb und ein Mode- Schalter 16 für die Wegzapfwelle, ein variabel einstellbarer Regler 17 zur Veränderung der Zeit für den An- bzw. Auslauf der Zapfwelle 1 im Normalbetrieb und ein weiterer variabel einstellbarer Regler 18 zur Veränderung der Zeit für den An- bzw. Auslauf der Zapfwelle 1 im HTS- bzw. Managementbetrieb. Weiterhin befinden sich auf der Bedien- und Anzeigeeinheit 12 ein weiterer variabel einstellbarer Regler 19 zur Bestimmung der Positionen des Hubwerks 9, bei denen das CVT- Getriebe 4 automatisch anlaufen bzw. stehenbleiben soll und ein Zapfwellen- Drehzahleinstellregler 20 zur Vorwahl der gewünschten Drehzahl der Zapfwelle 1. Schließlich besitzt die Bedien- und Anzeigeeinheit 12 noch Kontrollanzeigen, wozu eine CVT- Getriebe- EIN-Lampe 21, eine HTS- bzw. Management- EIN- Lampe 22 und eine Drehzahlanzeige 23 der Zapfwelle 1 gehören.

Weitere Eingangssignale erhält das Steuergerät 10 vom Ort des Entstehens selbst, wozu ein Sensor 24 zur Messung der Viskosität bzw. der Temperatur der Hydraulikflüssigkeit, ein Motordrehzahlsensor 25, ein CVT- Getriebeübersetzungssensor 26, der um weitere Sensoren für weitere Getriebeinformationen ergänzt werden kann, ein Zapfwellen- Drehzahlsensor 27, ein Zapfwellen-Drehmomentsensor 28 und ein Hubwerkstellungssensor 29 gehören.

Die Ausgangssignale gibt das Steuergerät 10 an das CVT- Getriebe 4 über eine Signalleitung 30 zur Ansteuerung der zu erreichenden Übersetzung weiter. Zur Signalauswertung der Schalter, Regler, Sensoren sowie Aktuatoren findet ein CAN- Bussystem 31 Anwendung.

Am Arbeitsgerät 8 ist noch ein Jobrechner 32 installiert, in dem der jeweilige Typ des Arbeitsgerätes 8 gespeichert ist und der über seinen Arbeitsgerät-BUS 33 mit dem Steuergerät (10) verbunden ist.

### Bezugszeichenaufstellung

- 1: Zapfwelle
- 2: Motor
- 3: Welle
- 4: CVT- Getriebe
- 5: Zwischenwelle
- 6: Gelenkwellen
- 7: Zapfwellenstummel
- 8: Arbeitsgerät
- 9: Hubwerk
- 10: Steuergerät
- 11: Prozessor
- 12: Bedien- und Anzeigeeinheit
- 13: Einschalter
- 14: Ausschalter
- 15: Mode- Schalter (Normal-/HTS- bzw. Managementbetrieb)
- 16: Mode- Schalter (Wegzapfwelle)
- 17: Regler (Normalbetrieb)
- 18: Regler (HTS- bzw. Managementbetrieb)
- 19: Regler (Hubwerkstellung)
- 20: Zapfwellen- Drehzahleinstellregler
- 21: CVT- Getriebe- EIN- Lampe
- 22: HTS- bzw. Management- EIN- Lampe
- 23: Drehzahlanzeige (Zapfwelle)
- 24: Sensor (Temperatur)
- 25: Motordrehzahlsensor
- 26: CVT- Getriebeübersetzungssensor
- 27: Zapfwellen- Drehzahlsensor
- 28: Zapfwellen- Drehmoment- Sensor
- 29: Hubwerkstellungssensor
- 30: Signalleitung
- 31: CAN- Bussystem
- 32: Jobrechner
- 33: Arbeitsgerät- BUS

## Patentansprüche

1. Regelung für den Antrieb einer Zapfwelle an einem Landfahrzeug, insbesondere an einem Traktor, bei dem im Antriebsstrang zwischen dem Motor (2) und der Zapfwelle (1) ein CVT-Getriebe (4) angeordnet ist, das mit einem Steuergerät (10) mit Prozessor (11) über eine Signalleitung (30) zum Empfang von dessen Ausgangssignalen verbunden ist,
wobei das Steuergerät (10) zur Bildung des Ausgangssignale über Eingangsleitungen mit Schaltern, Reglern, Sensoren, Aktuatoren etc. In Verbindung steht, **dadurch gekennzeichnet, dass** das Steuergerät (10) weiterhin über die Eingangsleitungen maschinenspezifische Werte des Landfahrzeuges sowie eines von ihm betriebenen Arbeitsgerätes (8) empfängt, und dass das Steuergerät (10) mit einem variabel einstellbaren Regler (17) zur Veränderung der Zeit für den An- bzw. Auslauf der Zapfwelle (1) im Normalbetrieb und einem weiteren variabel einstellbaren Regler (18) zur Veränderung der Zeit für den An- bzw. Auslauf der Zapfwelle (1) im HTS- bzw. Managementbetrieb in Verbindung steht.

2. Regelung nach Anspruch 1, **dadurch gekennzeichnet, dass** ein weiterer Sensor ein die augenblickliche Position des Hubwerks (9) feststellender Hubwerkstellungssensor (29) ist, der mit wenigstens einem weiteren variabel einstellbaren Regler (19) zur Bestimmung der Positionen des Hubwerks (9), bei denen das CVT-Getriebe (4) automatisch anlaufen bzw. stehenbleiben soll, verbunden ist.

3. Regelung nach Anspruch 1 oder 2, **dadurch gekennzeichnet, dass** im Steuergerät (10) Anlauf- und Auslaufkurven für verschiedene Arbeitsgeräte (8), Einsatzbedingungen und Maschinenspezifische Werte gespeichert sind, wobei das Steuergerät (10) daraus durch Auswertung der ihm zugeleiteten Eingangssignale die optimale Anlauf- bzw. Auslaufkurve für die verschiedenen Arbeitsgeräte (8) auswählt.

4. Regelung nach einem der Ansprüche 1 bis 3, **dadurch gekennzeichnet, dass** das Steuergerät (10) mit einem Mode-Schalter (15) zur Auswahl zwischen dem Normalbetrieb und dem HTS- bzw. Managementbetrieb und mit einem Mode- Schalter (16) für die Wegzapfwelle verbunden ist.

5. Regelung nach einem der Ansprüche 1 bis 4, **dadurch gekennzeichnet, dass** zur Signalverarbeitung der Schalter, Regler, Sensoren sowie Aktuatoren ein CAN- Bussystem (31) Anwendung findet.

6. Regelung nach einem der Ansprüche 1 bis 4, **dadurch gekennzeichnet, dass** zur Signalverarbeitung der Schalter, Regler, Sensoren sowie Aktuatoren ein Time- Trigger-Protokoll (TTP) Anwendung findet.

7. Regelung nach einem oder mehreren der vorstehenden Ansprüche, **dadurch gekennzeichnet, dass** am Arbeitsgerät (8) ein Jobrechner (32) installiert ist, in dem der jeweilige Typ des Arbeitsgerätes (8) gespeichert ist und der mit seinem Arbeitsgeräte-BUS (33) in der LBS- Ausführung oder nach ISO 11783 mit dem Steuergerät (10) in Verbindung steht.

## Claims

1. Control system for the drive of a take-off shaft on an agricultural vehicle, particularly a tractor, in which a CVT system (4) is located in the drive train between the engine (2) and the take-off shaft (1), which is connected to a control unit (10) with a microprocessor (11) by a signal lead (30) for receiving its output signals, whereby the control unit (10) in connected to switches, controllers, sensors, actuators, etc to form the output signals, **characterised in that** the control unit (10) continues to receive machine-specific variables of the agricultural vehicle through the input leads and from an implement (8) operated by the vehicle and **in that** the control unit (10) is connected to a variably-adjustable controller (17) for changing the starting and stopping time of the take-off shaft (1) in normal mode and a further variably-adjustable controller (18) for changing the starting and stopping time of the take-off shaft (1) in HTS or management mode.

2. Control system according to daim 1, **characterised in that** a further sensor is a lifting gear position sensor (29) which determines the current position of the lifting gear (9) and is connected to at least one further variably-adjustable controller (19) for determining the positions of the lifting gear (9) at which the CVT system (4) is to start or stop automatically.

3. Control system according to claim 1 or 2, **characterised in that** starting and stopping characteristic curves for different implements (8), conditions of use and variables specific to the machine are stored in the control unit (10), whereby the control unit (10) selects the optimum starting or stopping curve for the various implements (8) by analysing the input signals sent to it.

4. Control system according to any of the claims 1 to 3, **characterised in that** the control unit (10) is connected to a mode switch (15) for selecting normal mode, HTS or management mode, and with a mode switch (16) for the ground speed take-off shaft.

5. Control system according to any of the claims 1 to 4, **characterised in that** controllers, sensors and actuators are used in the CAN bus (31) to process the signals from the switches.

6. Control system according to any of the claims 1 to 4, **characterised in that** a time trigger protocol (TTP) is used to process signals from the switches, controllers, sensors and actuators.

7. Control system according to one or more of the aforegoing claims, **characterised in that** a job calculator (32) is installed on the implement (8), in which the respective type of implement (8) is stored and which is connected to the control unit (10) by its implement bus (33) in the LBS version or according to ISO 11783.

## Revendications

1. Régulation pour l'entraînement d'une prise de force d'un véhicule agricole, en particulier d'un tracteur, pour lequel dans la chaîne d'entraînement entre le moteur (2) et la prise de force (1), un régulateur de vitesse CVT (4) est disposé, qui est relié à un organe de commande (10) avec processeur (11) par l'intermédiaire d'une ligne de signalisation (30) pour la réception de ses signaux de sortie, l'organe de commande (10) étant en relation, pour la génération des signaux de sortie par l'intermédiaire de lignes d'entrée, avec des commutateurs, régulateurs, capteurs, actionneurs, etc., **caractérisée en ce que** l'organe de commande (10) reçoit en outre, par l'intermédiaire des lignes d'entrée, des valeurs mécaniques spécifiques du véhicule agricole, ainsi que d'un outil (8) commandé par celui-ci et **en ce que** l'organe de commande (10) est en relation avec un régulateur à ajustement variable (17) pour la modification de la durée de démarrage et d'arrêt de la prise de force (1) en mode normal et un autre régulateur à ajustement variable (18) pour la modification de la durée du démarrage ou de l'arrêt de la prise de force (1) dans le mode HTS ou de management.

2. Régulation selon la revendication 1, **caractérisée en ce qu'**un autre capteur est un capteur de position du dispositif de levage (29) déterminant la position instantanée du dispositif de levage (9), capteur qui est relié à au moins un autre régulateur (19) à ajustement variable pour la détermination des positions du dispositif de levage (9) pour lesquelles le variateur de vitesse CVT (4) doit démarrer ou s'immobiliser automatiquement.

3. Régulation selon la revendication 1 ou 2, **caractérisée en ce que**, dans l'organe de commande (10), des courbes de démarrage et d'arrêt sont mémorisées pour divers outils (8), diverses conditions d'utilisation et diverses valeurs mécaniques spécifiques, l'organe de commande (10) sélectionnant à partir de celles-ci, par évaluation des signaux d'entrée qu'l reçoit, la courbe optimale de démarrage ou d'arrêt pour les différents outils (8).

4. Régulation selon l'une des revendications 1 à 3, **caractérisée en ce que** l'organe de commande (10) est relié à un commutateur de mode (1) pour la sélection entre le mode normal et le mode HTS ou de management et à un commutateur de mode (18) pour la prise de force route.

5. Régulation selon l'une des revendications 1 à 4, **caractérisée en ce que** pour le traitement du signal des commutateurs, régulateurs, capteurs et actionneurs, on utilise un système CAN-Bus (31).

6. Régulation selon l'une des revendications 1 à 4, **caractérisée en ce que** pour le traitement du signal des commutateurs, régulateurs, capteurs et actionneurs, on utilise un protocole Time-Trigger (TTP).

7. Régulation selon l'une ou plusieurs des revendications qui précédent, **caractérisée en ce qu'**un compteur de tâches (32) est installé sur l'outil (8), dans lequel le type correspondant d'outil est mémorisé et qui, avec son bus d'outils (33) dans la version LBS ou selon l'ISO 11783, est en relation avec l'organe de commande (10).
